# NEUE EUROPÄISCHE PATENTSCHRIFT

(11) **EP 0 385 091 B2**
(45) Veröffentlichungstag und Bekanntmachung des Hinweises auf die Entscheidung über den Einspruch: **07.01.1998**
(45) Hinweis auf die Patenterteilung: 12.01.1994
(21) Anmeldenummer: 90101259.1
(22) Anmeldetag: 23.01.1990
(51) Int. Cl.: A01C 17/00

(54) **Schleuderstreuer**
Broadcaster
Epandeur centrifuge

(30) Priorität: 03.03.1989 DE 3906756
(43) Veröffentlichungstag der Anmeldung: 05.09.1990
(73) Patentinhaber: Rauch Landmaschinenfabrik GmbH, D-76545 Sinzheim (DE)
(72) Erfinder: Rauch, Norbert, D-7573 Sinzheim (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- CH-A- 382 790
- DE-A- 1 457 773
- DE-B- 1 215 986
- DE-B- 1 217 127
- FR-A- 621 096
- GB-A- 1 493 525
- GB-A- 1 499 541

## Beschreibung

Die Erfindung betrifft einen Schleuderstreuer für rieselfähiges Gut, insbesondere Dünger, mit einem Vorratsbehälter mit wenigstens einer einsteltbaren Auslauföffnung und einem diese nach unten verlängernden Auslaufschacht, aus dem das Streugut im Fallstrom strahlartig austritt, und einer darunter um eine versetzt zur Auslauföffnung und zum Auslaufschacht angeordnete Achse umlaufenden Schleuderscheibe mit wenigstens einem Wurfflügel, der sich über die gesamte radiale Ausdehnung des Streugutstrahls in Richtung zum Umfang der Schleuderscheibe erstreckt und nahe dessen Oberkante der Auslaufschacht endet. Solch ein Schlenderstreuer ist aus der Praxis bekannt.

Bei Streugeräten aller Art, insbesondere aber bei Düngerstreuern, ist man darauf bedacht, eine über die Streubreite möglichst gleiche Verteilung des Streugutes, d.h. eine über die Streubreite gleichbleibende Streudichte zu erzielen. Dieses Ziel wird am ehesten bei relativ kleinen Streumengen und oder kleinen Streubreiten erreicht. Das Streubild zeigt dann einen flach-dreieckförmigen Verlauf, dessen Maximum (Dreieckspitze) in der Mitte hinter dem Steuer liegen sollte und der dann nach beiden Seiten flach abfällt. Dies gilt sowohl für Einscheiben- als auch Zweicheibenstreuer. Die eigentliche Arbeitsbreite des Streuers ist diejenige Breite, bei der 50 % der gewünschten Streumenge ausgebracht sind. Durch entsprechendes Anschlußfahren kann dann eine Überlappung der Streubilder derart erzielt werden, daß sich die Streumengen jeder Fahrt so äddieren, daß über die gesamte bestreute Fläche eine annähernd gleichmäßige Streudichte erhalten wird. Mit zunehmender Streumenge und zunehmender Arbeitsbreite werden ungünstige Veränderung des Streubildes festgestellt, die auf den sogenannten "Pralleffekt" und den sogenannten "Mengeneffekt" zurückzuführen sind. Das Streubild weicht von der idealen Dreiecksform ab und zeigt einen kurvenförmigen Verlauf, die bei einem Einscheiben- und einem Zweischeibenstreuer sehr unterschiedlich sind. Um diese negativen Effekte zu dämpfen oder auszugleichen. sind bereits eine Vielzahl von Maßnahmen vorgeschlagen worden. Hierzu zählt auch die aus der Praxis bekannte Maßnahme, den Dünger nicht im freien Fall aus der Auslauföffnung austreten zu lassen, sondern in einem Auslaufschacht bis nahe an die Oberkante des Wurfflügels heranzuführen, um ein frühzeitiges Zerplatzen des Düngerstrahl - vor allem durch die von der umlaufenden Schleuderscheibe erzeugte Luftströmung - zu vermeiden. Die Führung des Düngers zu der Schleuderscheibe steht auch bei einem anderen bekannten Streuer (GB-B-1493525) zur Rede. Er weist zwei in Drehrichtung der Scheibe unmittelbar hintereinander angeordnete Dosieröffnungen auf. Die beiden Düngerstrahlen treten durch eine gemeinsame, größere Öffnung aus. Konzentrisch zur Drehachse der Scheibe ist eine Schürze angeordnet, die den Dünger auf die Scheibe leiten soll. Da die Wurfflüger nacheinander in beide Dügerstrahlen eintauchen, werden die Düngerpartikel in den gesamten, von der Schürze umgrenzten Raum reflektiert und somit über die gesamte Scheibe auf der von der Schürze begrenzten Kreisfläche verteilt. Der Pralleffekt wirkt sich hier also noch ungünstiger aus als bei einem Schacht. Es ist ferner bekannt (DE-B-12 17 127), an den Auslaufschacht ein hiervon getrenntes Führungsteil anzuschließen, das an seiner Unterseite durch einen zur Schleuderscheibe abfallend geneigten Boden geschlossen ist. Dieser Boden dient als Rutsche. Das Führungsteil kann um eine horizontale Achse geschwenkt werden, um dadurch den Neigungswinkel des Bodens und damit den Aufgabepunkt des Düngers variieren zu können.

Bei großen Streubreiten tritt neben den vorgenannten Effekten auch noch ein sogenannter "Mengenfehler" auf, der zudem mit der Arbeitsbreite. also letztendlich mit der Drehzahl der Schleuderscheiben variiert. Als Mengenfehler bezeichnet man den Effekt, daß bei einer bestimmten Einstellung des freien Querschnittes der Austauföffnung an sich eine bestimmte Ausbringmenge zu erwarten wäre, die - bei freiem Fall der Düngerpartikelproprotional dem Querschnitt und der Austrittsgeschwindigkeit des Düngers ist. In Wirklichkeit zeigt sich aber, daß die tatsächliche Streumenge nicht mit dieser theoretisch erwarteten Ausbringmenge übereinstimmt. nämlich stets kleiner als diese ist. Dieser Mengenfehler vergrößert sich noch mit zunehmender Arbeitsbreite.

Dieser Mengenfehler ist insbesondere deshalb gravierden, weil der Landwirt in der Regel Abstreuproben vornimmt, um düngerspezifische Einflußfaktoren zu erfassen und die maschine anhand von Streutabellen entsprechend einzustellen. Diese Abstreuproben werden aber bei freiem Fall des Düngers durchgeführtund sind somit für große Streumengen nicht mehr repräsentativ. Der Mengenfehler läßt sich nur während der Streuarbeit erfassen, was dem Landwirt nicht möglich ist. Er kann zumindest theoretisch in Streutabellen des Streuerherstellers berücksichtigt werden, trägt dann aber aufgrund der Vielzahl von Düngersorten und ihrer stets variierenden Schüttguteigenschatten meist nicht den in der Praxis gegebenen Situationen Rechnung.

Der Erfindung liegt die Aufgabe zugrunde, bei einem Schleuderstreuer - Ein- oder Zweischeibenstreuer - den Mengenfehler zu beseitigen, zumindest aber in seinen negativen Auswirkungen weitestgehend zu reduzieren und damit komplizierte Feldversuche beim Hersteller und/oder beim Landwirt zu vermeiden und die Aufnahme in Streutabellen zu erübrigen.

Diese Aufgabe wird erfindungsgemäß dadurch gelöst, daß der Auslaufschacht sich zu einer sich in Drehrichtung der Schleuderscheibe über den Umriß der Auslauföffnung hinaus erstreckenden, nur nach unten offenen Kammer erweitert, die durch eine der Eintrittsseite des Wurfflügels gegenüberliegende Wandung begrenzt ist.

Es hat sich überraschend gezeigt, daß mit einer in Drehrichtung der Schleuderscheiben dem eigentlichen Auslaufschacht folgenden Kammer der Mengenfehler praktisch vollständig beseitigt werden kann. Die Ursache ist vermutlich in folgender überlegung zu sehen: Bei Vorbeistreichen des Wurfflügels unterhalb des Auslaufschachtes, insbesondere wenn dieser zur Vermeidung von Prailverlusten bis nahe an die Oberkante des Wurfflügels geführt ist, wird der Dünger im Auslaufschacht aufgestaut. Dies ist darauf zurückzuführen, daß einerseits während des Vorbeilaufs des oberen Schenkels des Wurfflügels der Auslaufschacht praktisch kurzfristig "verschlossen" wird, der Dünger also nicht mehr im freien Fall austreten kann. Hinzu kommt, daß vom Augenblick des Eintauchens des Wurfflügels in den Düngerstrahl die von der vorlaufenden Kante des Wurfflügels getroffenen Partikel in Drehrichtung nach vorne, aber auch in allen anderen Richtungen, so auch in den Auslaufschacht hinein reflektiert werden mit der Folge, daß der freie Fall des Düngerstrahls gestört wird. Vor allem das letztgenannte Phänomen wirkt sich um so stärker aus, je höher die Drehzahl der Schleuderscheibe, je größer also die Arbeitsbreite ist. Ingesamt aber tritt der Rückstaueffekt bei großen Streumengen über sämtliche Arbeitsbreiten auf.

Mit der an den Auslaufschacht in Drehrichtung anschließenden Kammer wird eine Art zusätzlicher Expansionsraum geschaffen, in den der aus der Auslauföffnung austretende Dünger beim Eintritt des Wurfflügel an der gegenüberliegenden Seite ausweichen bzw. expandieren kann. Die in der Auslauföffnung vorgegebene und nicht beeinflußbare Partikeldichte wird unterhalb der Auslauföffnung aufgrund der Kammer verringert, indem sich der Düngerstrahl auf einen größeren Querschnitt ausdehnen kann. Trotz dieses größeren Querschnittes können die Prallverluste, die den vorgenannten "Pralleffekt" bestimmen, nicht ansteigen, da die Kammer gleichermaßen wie der Auslaufschacht bis nahe an die Umlaufebene des oberen Schenkels des Wurfflügels heranreichen kann. Auch der Effekt der Reflexion der Düngerpartikel in den Auslaufschacht hinein wird wesentlich reduziert, da die meisten nach oben reflektierten Partikel in die Kammer geschleudert werden.

Der Düngerstrahl wird also zunächst durch den Auslaufschacht gefaßt und kann sich erst mit etwas Abstand unterhalb der Auslauföffnung in Drehrichtung der Schleuderscheibe in die Kammer hinein erweitern.

Durch die konkrete Form der Kammer, insbesondere ihren Querschnittsverlauf, läßt sich der Aufgabepunkt auf der Schleuderscheibe den jeweiligen Gegebenheiten anpassen. So kann vorgesehen sein, daß die Kammer einen - mit Bezug auf die Achse der Schleuderscheibe - von innen nach außen zunehmenden Querschnitt oder auch einen umgekehrten Querschnittsverlauf aufweist. Statt dessen kann auch die der Eintrittsseite des Wurfflügels in den Düngerstrahl abgekehrte Wandung der Kammer etwa parallel zur entsprechenden Wandung des Auslaufschachtes verlaufen, so daß in Drehrichtung über die radiale Erstreckung der Kammer stets eine gleichbleibende Breite gegeben ist, wodurch der Aufgabepunkt am wenigsten beeinflußt wird, während bei den beiden vorgenannten Ausführungen der Aufgabepunkt mehr nach außen oder nach innen verlagert wird. Eine wiederum andere Ausführungsform kann so ausgebildet sein, daß die Kammer einen von der außen und der innen liegenden Begrenzung des Auslaufschachtes zur Mitte hin zunehmenden Querschnitt aufweist. Mit allen Ausführungen läßt sich nicht nur der Aufgabepunkt beeinflussen, sondern auch die Art der Aufweitung des Düngerstrahls in der Kammer.

Wie schon angedeutet, wird ein Teil des Mengenfehlers bzw. des Rückstaus durch die Reflexion bzw. die Beschleunigung der Partikel durch den vorbeilaufenden Wurfflügel verursacht sowie dadurch, daß die vorlaufende Kante des Wurfflügels Düngerpartikel vor sich herschiebt. Dieser auf den Mengenfehler sich auswirkende Anteil kann gemäß einem weiteren Merkmal der Erfindung dadurch reduziert bzw. beseitigt werden, daß die in Drehrichtung vorlaufende Kante des Wurfflügels ein Sägezahnprofil aufweist, das sich mit Vorteil zumindest über den in den Düngerstrahl eintretenden Bereich des Wurfflügels erstreckt.

Im Gegensatz zu herkömmlichen Schleuderstreuern, bei denen der Wurfflügel mit einer geradlinigen Kante den Düngerstrahl "durchschneidet" und infolgedessen die gesamte Impulsenergie innerhalb des Auslaufschachtes konzentriert wird, wird durch das vorgenannte Merkmal die vorlaufende Kante in mehrere Winkel zueinander verlaufende Abschnitte aufgeteilt, so daß der in Umlaufrichtung schiebende und zum Rückstau führende Effekt reduziert wird, insbesondere wird ein Teil der Düngerpartikel von den jeweils außen liegenden Flanken jedes Sägezahns bevorzugt nach außen transportiert.

Der Einfluß des Sägezahnprofils läßt sich durch entsprechende Formgebung verstärken. So kann das Sägezahnprofil über seine gesamte Erstreckung gleichförmig oder aber auch eine sich von innen - mit Bezug auf die Schleuderscheibe - nach außen ändernde Zahnform aufweisen.

Auch wird man die Sägezahnform danach ausrichten, wie der Wurfflügel auf der Schleuderscheibe befestigt ist. Neben der radialen Anordnung ist sowohl eine sogenannte vorgestellte, wie auch eine rückgestellte Anordnung des Wurfflügels bekannt. Insbesondere die Rückstellung des Wurfflügels wird häufig angetroffen, da sie größere Arbeitsbreiten gestattet. Im Falle eines solchen rückgestellten Wurfflügels ist mit Vorteil vorgesehen, daß jeder Zahn des Sägezahnprofils eine etwa radial verlaufende Flanke aufweist, während die andere Flanke beispielsweise senkrecht dazu und damit im wesentlichen in Umlaufrichtung verläuft. Diese Form begünstigt bei einem rückgestellten Flügel den Transport der Düngerpartikel nach außen.

Um die Prallverluste vor allem aufgrund der Erweiterung des Querschnittes des Düngerstrahls zu reduzieren und vor allem dadurch eine Erhöhung des Pralleffektes zu vermeiden, ist erfindungsgemäß weiterhin vorgesehen, daß die Kammer zumindest entlang ihrer der Eintrittsseite des Wurfflügels in den Düngerstrahl gegenüberliegenden Begrenzung mit flexiblen, in Drehrichtung des Wurfflügels ausweichenden Materialstreifen versehen ist, die in die Bewegungsbahn des Wurfflügels hineinragen, wobei die Ausbildung vorzugsweise so getroffen ist, daß die flexiblen Materialstreifen an denjenigen Begrenzungen des Auslaufschachtes und der Kammer angeordnet sind, an denen sie bei Durchlauf des Wurfflügels durch den Düngerstrahl nicht in den Düngerstrahl ausweichen. Die flexiblen Materialstreifen sind zweckmäßigerweise als Borsten- oder Borstenbündel aus Kunststoff ausgebildet.

Durch die vorgenannte Ausführung wird beim Eintauchen des Wurfflügels in den Streugutstrahl dieser auf der gegenüberliegenden Seite mittels der flexiblen Materialstreifen geführt und zusammengehalten. Es wird insbesondere vermieden, daß der Streugutstrahl bei diesem Eintauchen, wie bei bekannten Schleuderstreuern üblich, zerplatzt, das heißt, ein großer Teil der Partikel in allen Richtungen reflektiert wird und - ohne in den Wurfflügel zu gelangen - unkontrolliert verspritzen. Die hierfür verantwortlichen Impulskräfte zwischen Wurfflügel und Partikeln und den Partikeln untereinander werden von den flexiblen Materialstreifen aufgenommen und gedämpft bzw. sogar beseitigt. Dadurch ist sichergestellt, daß der Wurfflügel während seines Vorbeilaufs an dem Auslauf und der Kammer den Düngerstrahl über seinen gesamten Querschnitt aufnimmt und die Partikel nach außen beschleunigt werden. Kunststoff-Borsten sind deshalb besonders geeignet, weil sie einerseits eine ausreichende Flexibilität haben, um dem Wurfflügel auszuweichen, andererseits ein hohes Rückstellvermögen besitzen, um sich nach dem Vorbeilauf des Wurfflügels wieder in der senkrechten Ausgangslage auszurichten. Auch sind die heute zur Verfügung stehenden Kunststoff-Borsten ausreichend verschleißfest. Durch die erfindungsgemäße Ausbildung ist ferner gewährleistet, daß auch bei Schleuderscheiben mit vier Wurfflügeln, die in der Regel für größere Streubreiten vorgesehen sind, die Prallverluste nicht, wie sonst üblich, ansteigen.

Eine weitere bevorzugte Ausführungsform zeichnet sich dadurch aus, daß der obere Schenkel des Wurfflügels zumindest mit seiner vorlaufenden Kante und in dem am Auslaufschacht und der Kammer vorbeilaufenden Abschnitt in einer Ebene parallel zur Unterkante des Auslaufschachtes und der Kammer mit geringem Abstand unter dieser angeordnet ist, wobei vorzugsweise weiterhin vorgesehen ist, daß der obere Schenkel jedes Wurfflügels von seiner vorlaufenden Kante entgegen der Drehrichtung unter Bildung eines Freiwinkels nach unten geneigt ist.

Unabhängig von der Neigungslage der Wurfflügel gegenüber der Horizontalen, insbesondere auch bei einer für große Streubreiten vorgesehenen tellerartigen Ausbildung der Schleuderscheibe, bei der die Wurfflügel nach außen ansteigen, ist sichergestellt, daß der obere Schenkel immer unmittelbar unterhalb der Unterkante des Auslaufschachtes und der Kammer vorbeistreicht. Dadurch wird die Anzahl derjenigen Partikel, die in den Spalt zwichen dem oberen Schenkel und der Unterkante des Auslaufschachtes geraten und nicht ausreichend beschleunigt werden, minimiert. Durch den weiterhin vorgesehenen Freiwinkel, unter dem der obere Schenkel angestellt ist, ergibt sich, daß der Wurfflügel nur mit der vorlaufenden Kante auf den Düngerstrahl auftrifft, während die hinter der vorlaufenden Kante austretenden Düngerpartikel auf die geneigte Freifläche fallen und vorwiegend nach hinten und in Richtung auf die Schleuderscheibe reflektiert werden, so daß sie vom nächsten Wurfflügel erfaßt werden können. Ferner wird durch den Freiwinkel der Rückstau des Düngerstrahls im Auslaufschacht, der zu einer unkontrollierten Änderung des Mengendurchsatzes führt, reduziert bzw. vermieden.

Schließlich kann gemäß einer zweckmäßigen Ausführungsform der Auslaufschacht, gegebenenfalls auch die Kammer einen von der Auslauföffnung nach unten zunehmenden Querschnitt aufweisen. Dieses Merkmal dient der weiteren Aufweitung des Düngerstrahls und der weiteren Reduzierung des Mengenfehlers.

Nachstehend ist die Erfindung anhand von in der Zeichnung wiedergegebenen Ausführungsbeispielen beschrieben. In der Zeichnung zeigen:
- Figur 1: eine schematische Teilansicht eines Zweischeiben-Schleuderstreuers;
- Figur 2 - 4: eine schematische Seitenansicht verschiedener Phasen beim Durchtritt eines Wurfflügels durch den Düngerstrahl;
- Figur 5: eine schematische Draufsicht auf die Schleuderscheiben gemäß Figur 1;
- Figur 6: eine der Figur 5 entsprechende Ansicht einer anderen Ausführungsform und
- Figur 7: eine Draufsicht einer Schleuderscheibe in einer weiteren Ausführungsform.

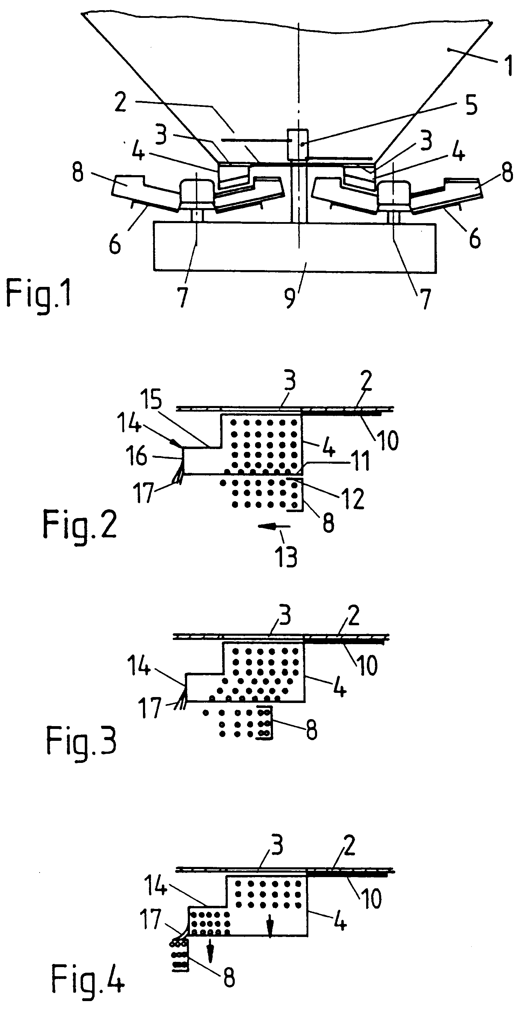

Der in Figur 1 schematisch und ausschnittsweise wiedergegebene Düngerstreuer weist einen trichterförmigen Vorratsbehälter 1 mit einem Boden 2, darin angeordneten Auslauföffnungen 3 und daran anschließende, die Auslauföffnungen nach unten verlängernde Auslaufschächte 4 auf. Innerhalb des Vorratsbehälters 1 ist ein den Dünger lockernder und rieselfähig haltender Rührer 5 angeordnet. Unterhalb des Bodens 2 des Vorratsbehälters 1 ist unter jedem Auslaufschacht 4 eine Schleuderscheibe 6 angeordnet, deren Drehachse 7 gegenüber dem Auslaufschacht 4 jeweils nach außen versetzt ist. Jede Schleuderscheibe weist wenigstens einen, beim gezeigten Ausführungsbeispiel zwei Wurfflügel 8 auf, die sich vom Zentrum der Schleuderscheibe nach außen erstrecken. Die Schleuderscheiben 6 und der Rührer 5 werden beispielsweise von der Zapfwelle eines Schleppers über Kegelradgetriebe angetrieben, die in dem schematisch wiedergegebenen Getriebegehäuse 9 untergebracht sind.

Die Schleuderscheiben 6 sind bei dem in Figur 1 gezeigten Ausführungsbeispiel tellerförmig mit nach oben ansteigender Wandung ausgebildet, so daß auch die Wurfflügel 8 entsprechend geneigt nach oben verlaufen. Diese Ausbildung ist insbesondere für große Streubreiten geeignet, um eine günstige Ballistik für die die Schleuderscheibe 6 verlassenden Düngerpartikel zu erzielen.

In den Figuren 2 bis 4 ist ferner unterhalb der Auslauföffnung 3 ein Dosierschieber 10 erkennbar, mittels dessen der freie Querschnitt der Auslauföffnung 3 und damit die Streumenge eingestellt werden kann. Es ist ferner erkennbar, daß der Auslaufschacht 4 unmittelbar an die Auslauföffnung 3 anschließt und sein Querschnitt etwa dem Querschnitt der Auslauföffnung entspricht, jedenfalls aber nicht kleiner als diese ist. Unmittelbar unterhalb der Unterkante 11 des Auslaufschachtes läuft der Wurfflügel 8 mit seinem oberen Schenke 12 vorbei, wobei die Umlaufrichtung mit 13 angedeutet ist. Der obere Schenkel 12 kann gegebenenfalls von seiner vorlaufenden Kante nach hinten geneigt sein.

Der Auslaufschacht 4 weist in Drehrichtung 13 nach vorne versetzt eine Kammer 14 auf, die beim gezeigten Ausführungsbeispiel von einer Deckwand 15 und einer der Eintrittsseite des Wurfflügels 8 gegenüberliegenden Wandung 16 begrenzt ist. An der Wandung 16 sind außerdem flexible Materialstreifen 17, z. B. in Form von Borsten oder Borstenbündeln, angebracht, die so weit nach unten ragen, daß sie in die Umlaufebene des oberen Schenkels 12 des Wurfflügels 8 hineinragen.

Beim Vorbeilauf des Wurfflügels werden die im freien Fall den Auslaufschacht 4 durchfallenden Düngerpartikel, wie Figur 2 zeigt, von dem Wurfflügel erfaßt, wobei hier eine idealisierte Darstellung gewählt ist. In Wirklichkeit werden ein großer Teil der Düngerpartikel in verschiedene Richtungen reflektiert. Beim Vorbeilauf des Wurfflügels 8 wird ein Teil der Düngerpartikel innerhalb des Auslaufschachtes 4 nach vorne verdrängt in die Kammer 14 und auch ein Teil der insbesondere von der vorlaufenden Kante des Wurfflügels 8 reflektierten Partikel werden in diese Kammer beschleunigt. Zugleich verdichtet sich der Dünger innerhalb des Wurfflügels, da er während des Vorbeilaufs eine zunehmende Menge in sich aufnimmt. Ein weiterer Anteil der Düngerpartikel wird in die Kammer 14 abgedrängt bis schließlich eine - wiederum idealisiert wiedergegebene - Konstellation gegeben ist, wie sie Figur 4 zeigt.

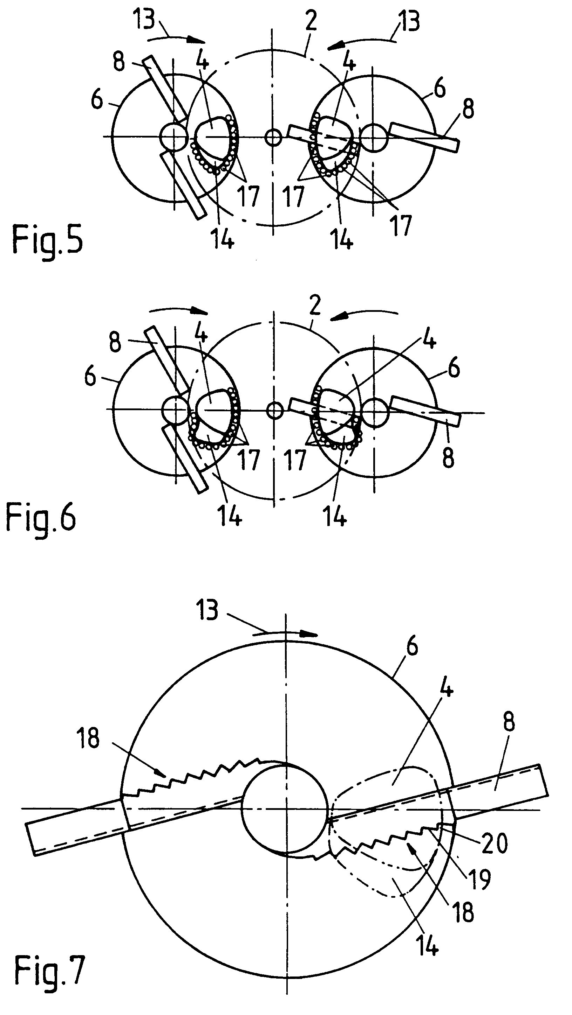

In Figur 5 ist der Boden 2 des Vorratsbehälters 1 strichpunktiert wiedergegeben und sind die beiden Schleuderscheiben 6 mit den Wurfflügeln 8 in Draufsicht erkennbar. Die Wurfflügel sind in diesem Fall zurückgestellt. Es sind weiterhin die Auslaufschächte 4 gezeigt, an die in Umlaufrichtung nach vorne die Kammern 14 anschließen, die bei diesem Ausführungsbeispiel einen - mit Bezug auf die Achse der Schleuderscheiben 6 - von innen nach außen zunehmenden Querschnitt aufweisen. Ferner sind die flexiblen Materialstreifen bzw. Borsten nicht nur an der Wandung des Schachtes 14, sondern auch an der außen liegenden Wandung des Auslaufschachtes angeordnet, so daß sie alle Düngerpartikel, die beim Eintreten des Wurfflügels 8 in den Düngerstrahl nach außen verspritzen könnten, weitestgehend zurückhalten.

Bei der Ausführungsform gemäß Figur 6 ist die Querschnittsform der Kammern 14 etwas anders gestaltet, indem der Querschnitt von außen nach innen bzw. bis in einen mittleren Bereich zunimmt.

Bei der Ausführungsform gemäß Figur 7 weisen die Wurfflügel 8 in ihrem unterhalb des Auslaufschachtes 4 bzw. der Kammer 14 vorbeilaufenden Abschnitt ein Sägezahnprofil 18 auf. Im Falle eines rückgestellten Wurfflügels 8, wie er in Figur 7 gezeigt ist, weist jeder einzelne Sägezahn eine etwa radial verlaufende Flanke 19 und eine dazu etwa senkrechte Flanke 20 auf, so daß sich über die gesamte Länge der vorlaufenden Kante des Wurfflügels 8 ein ungleichförmiges Sägezahnprofil ergibt.

## Patentansprüche

1. Schleuderstreuer für rieselfähiges Gut, insbesondere Dünger, mit einem Vorratsbehälter (1) mit wenigstens einer einstellbaren Auslauföffnung (3) und einem diese nach unten verlängernden Auslaufschacht (4), aus dem das Streugut im Fallstrom strahlartig austritt, und einer darunter um eine versetzt zur Auslauföffnung (3) und zum Auslaufschacht (4) angeordnete Achse (7) umlaufenden Schleuderscheibe (6) mit wenigstens einem Wurfflügel (8), der sich über die gesamte radiale Ausdehnung des Streugutstrahls in Richtung zum Umfang der Schleuderscheibe (6) erstreckt und nahe dessen Oberkante der Auslaufschacht endet, dadurch gekennzeichnet, daß der Auslaufschacht (4) sich zu einer sich in Drehrichtung (13) der Schleuderscheibe (6) über den Umriß der Auslauföffnung (3) hinaus erstrackenden, nur nach unten offenen Kammer (14) erweitert, die durch eine der Eintrittsseite des Wurfflügels gegenüberliegende Wandung begrenzt ist.

2. Schleuderstreuer nach Anspruch 1, dadurch gekennzeichnet, daß die Kammer (14) mit Abstand unterhalb der Auslauföffnung (3) an der der Eintrittsseite des Wurfflügels (8) in den Düngerstrahl gegenüberliegenden Wandung des Auslaufschachtes (8) angesetzt ist.

3. Schleuderstreuer nach Anspruch 1 oder 2, dadurch gekennzeichnet, daß die Kammer (14) einen - mit Bezug auf die Achse (7) der Schleuderscheibe (6) - von innen nach außen zunehmenden Querschnitt aufweist.

4. Schleuderstreuer nach Anspruch 1 oder 2, dadurch gekennzeichnet, daß die Kammer (14) einen - mit Bezug auf die Achse (7) der Schleuderscheibe 86) - von außen nach innen zunehmenden Querschnitt aufweist.

5. Schleuderstreuer nach Anspruch 1 oder 2, dadurch gekennzeichnet, daß die der Eintrittsseite des Wurfflügels (6) in den Düngerstrahl abgekehrte Wandung (16) der Kammer (14) etwa parallel zur entsprechenden Wandung des Auslaufschachtes (4) verläuft.

6. Schleuderstreuer nach Anspruch 1 oder 2, dadurch gekennzeichnet, daß die Kammer (14) einen von der außen und der innen liegenden Begrenzung des Auslaufsschachtes (4) zur Mitte hin zunehmenden Querschnitt aufweist.

7. Schleuderstreuer nach einem der Ansprüchen 1 bis 6, dadurch gekennzeichnet, wobei der Wurfflügel im wesentlichen eine in Drehrichtung und in radialer Richtung offene Rinne bildet, die nach oben durch einen in Umlaufrichtung weisenden Schenkel begrenzt ist, dadurch gekennzeichnet, daß die in Drehrichtung (13) vorlaufende Kante des Wurfflügels (8) ein Sägezahnprofil (18) aufweist.

8. Schleuderstreuer nach einem der Ansprüche 1 bis 7, dadurch gekennzeichnet, daß sich das Sägezahnprofil (18) zumindest über den in den Düngerstrahl eintretenden Bereich des Wurfflügels (8) erstreckt.

9. Schleuderstreuer nach einem der Ansprüche 1 bis 8, dadurch gekennzeichnet, daß das Sägezahnprofil (18) über seine gesamte Erstreckung gleichförmig ausgebildet ist.

10. Schleuderstreuer nach einem der Ansprüche 1 bis 9, dadurch gekennzeichnet, daß das Sägezahnprofil (18) eine sich von innen nach außen ändernde Zahnform aufweist.

11. Schleuderstreuer nach einem der Ansprüche 1 bis 10 mit einem gegenüber einem Radius der Schleuderscheibe zurückgestellten Wurfflügel, dadurch gekennzeichnet, daß jeder Zahn des Sägezahnprofils (18) eine etwa radial verlaufende Flanke (19) aufweist.

12. Schleuderstreuer nach einem der Ansprüche 1 bis 11, dadurch gekennzeichnet, daß jeder Zahn des Sägezahnprofils (18) eine etwa radial (19) und eine dazu senkrecht verlaufende Flanke (20) aufweist.

13. Schleuderstreuer nach einem der Ansprüche 1 bis 12, dadurch gekennzeichnet, daß die Kammer zumindest entlang ihrer der Eintrittsseite des Wurfflügels (8) in den Düngerstrahl gegenüberliegenden Begrenzung mit flexiblen, in Drehrichtung des Wurfflügels ausweichenden Materialstreifen (17) versehen ist, die in die Bewegungsbahn des Wurfflügels (8) hineinragen.

14. Schleuderstreuer nach einem der Ansprüche 1 bis 13, dadurch gekennzeichnet, daß die flexiblen Materialstreifen (17) an denjenigen Begrenzungen der Kammer (14) und des Auslaufschachtes (4) angeordnet sind, an denen sie bei Durchlauf des Wurfflügels (8) durch den Düngerstrahl nicht in den Düngerstrahl ausweichen.

15. Schleuderstreuer nach einem der Ansprüche 1 bis 14, dadurch gekennzeichnet, daß die flexiblen Materialstreifen (17) als Borsten- bzw. Borstenbündel aus Kunststoff ausgebildet sind.

16. Schleuderstreuer nach einem der Ansprüche 1 bis 15, dadurch gekennzeichnet, daß der obere Schenkel (12) des Wurfflügels (8) zumindest mit seiner vorlaufenden Kante und in dem am Auslaufschacht (4) vorbeilaufenden Abschnitt in einer Ebene parallel zur Unterkante des Auslaufschachtes und der Kammer mit geringem Abstand unter dieser angeordnet ist.

17. Schleuderstreuer nach einem der Ansprüche 1 bis 16, dadurch gekennzeichnet, daß der obere Schenkel (12) jedes Wurfflügels (8) von seiner vorlaufenden Kante entgegen der Drehrichtung unter Bildung eines Freiwinkels nach unten geneigt ist.

18. Schleuderstreuer nach einem der Ansprüche 1 bis 17, dadurch gekennzeichnet, daß der Auslaufschacht (4) und die Kammer (14) einen von der Auslauföffnung (3) nach unten zunehmenden Querschnitt aufweist.

## Claims

1. Centrifugal spreader for free-flowing material, particularly fertilizer, with a storage container (1) having at least one adjustable discharge opening (3) and a discharge shaft (4) extending the latter in the downwards direction and from which the spreading material to be spread passes out in radial downward manner, and a centrifugal disk (6) rotating about a spindle (7) displaced with respect to the discharge opening (3) and the discharge shaft (4) and having at least one spreading blade (8), which extends over the entire radial extension of the spreading material jet in the direction of the circumference of the centrifugal disk (6) and the discharge shaft terminates close to its upper edge, characterized in that the discharge shaft (4) is widened to an only downwardly open chamber (14) extending in the rotation direction (13) of the centrifugal disk (6) over and beyond the contour of the discharge opening (3) and being delimited by the wall opposite to the entrance side of the spreading blade (8).

2. Centrifugal spreader according to claim 1, characterized in that the chamber (14) in spaced manner below the discharge opening (3) is attached to the wall of the discharge shaft (4) facing the entrance side of the spreading blade (8) into the fertilizer jet.

3. Centrifugal spreader according to claim 1 or 2, characterized in that the chamber (14) has a cross-section increasing from the inside to the outside with respect to the spindle (7) of the centrifugal disk (6).

4. Centrifugal spreader according to claim 1 or 2, characterized in that the chamber (14) has a cross-section increasing from the outside to the inside, with respect to the spindle (7) of the centrifugal disk (6).

5. Centrifugal spreader according to claim 1 or 2, characterized in that the wall (16) of the chamber (14) remote from the entrance side of the spreading blade (6) in the fertilizer jet is approximately parallel to the corresponding wall of the discharge shaft (4).

6. Centrifugal spreader according to claim 1 or 2, characterized in that the chamber (14) has a cross-section increasing towards the centre from the outside and inside boundary of the discharge shaft (4).

7. Centrifugal spreader according to one of the claims 1 to 6, characterized in that the spreading blade substantially forms a channel which is open in the radial direction and in the rotation direction, which is upwardly bounded by a circumferentially directed leg, characterized in that the leading edge of the spreading blade (8) in the rotation direction (13) has a sawtooth profile (18).

8. Centrifugal spreader according to one of the claims 1 to 7, characterized in that the sawtooth profile (18) extends at least over the area of the spreading blade (8) entering the fertilizer jet.

9. Centrifugal spreader according to one of the claims 1 to 8, characterized in that the sawtooth profile (18) has a uniform construction over its entire extension.

10. Centrifugal spreader according to one of the claims 1 to 9, characterized in that the sawtooth profile (18) has a tooth shape varying from the inside to the outside.

11. Centrifugal spreader according to one of the claims 1 to 10, with a spreading blade set back with respect to the radius of the centrifugal disk, characterized in that each tooth of the sawtooth profile (18) has an approximately radially directed flank (19).

12. Centrifugal spreader according to one of the claims 1 to 11, characterized in that each tooth of the sawtooth profile (18) has an approximately radial flank (19) and a flank (20) perpendicular thereto.

13. Centrifugal spreader according to one of the claims 1 to 12, characterized in that, at least along its boundary facing the entrance side of the spreading blade (8) into the fertilizer jet, the chamber is provided with flexible material strips (17) giving way in the spreading blade rotation direction and which project into the movement path of the spreading blade (8).

14. Centrifugal spreader according to one of the claims 1 to 13, characterized in that the flexible material strips (17) are located on those boundaries of the chamber (14) and the discharge shaft (4), where they do not give way into the fertilizer jet when the spreading blade (8) passes through the latter.

15. Centrifugal spreader according to one of the claims 1 to 14, characterized in that the flexible material strips (17) are constructed as plastic bristles or bristle bundles.

16. Centrifugal spreader according to one of the claims 1 to 15, characterized in that the upper leg (12) of the spreading blade (8), at least with its leading edge and in the portion moving passed the discharge shaft (4), is located in a plane parallel to the lower edge of the discharge shaft and the chamber is located at a limited distance below the same.

17. Centrifugal spreader according to one of the claims 1 to 16, characterized in that the upper leg (12) of each spreading blade (8) is downwardly inclined from its leading edge counter to the rotation direction and accompanied by the formation of a free angle.

18. Centrifugal spreader according to one of the claims 1 to 17, characterized in that the discharge shaft (4) and the chamber (14) have a cross-section which increases downwards from the discharge opening (3).

## Revendications

1. Epandeur centrifuge pour matériau susceptible d'écoulement, en particulier engrais, comportant un réservoir de stockage (1) présentant au moins une sortie d'écoulement réglable (3) prolongée vers le bas par un puits de sortie (4), par lequel le matériau d'épandage s'écoule en faisceau par gravité, et présentant un disque d'épandage (6) inférieur, en rotation sur un axe (7) disposé en position décalée par rapport à la sortie d'écoulement (3) et au puits de sortie (4), comportant au moins une ailette de projection (8), qui s'étend sur tout le secteur radial du faisceau de matériau d'épandage dans la direction de la périphérie du disque d'épandage (6) et près de l'arête supérieure de laquelle le puits de sortie débouche, caractérisé en ce que le puits de sortie (4) s'élargie en une chambre (14) ouverte uniquement vers le bas, qui s'étend dans le sens de rotation (13) du disque d'épandage (16) au-dessus et au-delà du contour de la sortie d'écoulement (3), chambre délimitée par une paroi située en regard du bord d'attaque de l'ailette de projection.

2. Epandeur centrifuge selon la revendication 1, caractérisé en ce que la chambre (14) est placée en retrait sous la sortie d'écoulement (3) à côté de la paroi du puits de sortie (4) située en face du bord d'attaque de l'ailette de projection (8) dans le faisceau d'engrais.

3. Epandeur centrifuge selon la revendication 1 ou 2, caractérisé en ce que la chambre (14) présente une section - par rapport à l'axe (7) du disque d'épandage (6) - croissante de l'intérieur vers l'extérieur.

4. Epandeur centrifuge selon la revendication 1 ou 2, caractérisé en ce que la chambre (14) présente une section - par rapport à l'axe (7) du disque d'épandage (6) - croissante de l'extérieur vers l'intérieur.

5. Epandeur centrifuge selon la revendication 1 ou 2, caractérisé en ce que la paroi (16) de la chambre (14) éloignée du bord d'attaque de l'ailette de projection (6) dans le faisceau d'engrais s'étend à peu près parallèlement à la paroi correspondante du puits de sortie.

6. Epandeur centrifuge selon la revendication 1 ou 2, caractérisé en ce que la chambre (14) présente une section augmentant des limites intérieures et extérieures du puits de sortie (4) vers le milieu.

7. Epandeur centrifuge selon l'une quelconque des revendications 1 à 6, caractérisé en ce que l'ailette de projection forme essentiellement un canal ouvert s'étendant dans le sens de rotation et dans la direction radiale, canal limité vers le haut par une arête orientée dans le sens de rotation, et en ce que le bord d'attaque de l'ailette de projection (8) qui s'étend dans le sens de rotation (13) présente un profil en dents de scie (18).

8. Epandeur centrifuge selon l'une quelconque des revendications 1 à 7, caractérisé en ce que le profil en dents de scie (18) s'étend au moins sur la zone de l'ailette de projection (8) attaquant le faisceau d'engrais.

9. Epandeur centrifuge selon l'une quelconque des revendications 1 à 8, caractérisé en ce que le profil en dents de scie (18) est conformé de façon uniforme sur toute son étendue.

10. Epandeur centrifuge selon l'une quelconque des revendications 1 à 9, caractérisé en ce que le profil en dents de scie (18) présente une forme de dent différente de l'intérieur vers l'extérieur.

11. Epandeur centrifuge selon l'une quelconque des revendications 1 à 10, comportant une ailette de projection rapportée à un rayon du disque d'épandage, caractérisé en ce que chaque dent du profil en dents de scie (18) présente une arête s'étendant à peu près radialement.

12. Epandeur centrifuge selon l'une quelconque des revendications 1 à 11, caractérisé en ce que chaque dent du profil en dents de scie présente une arête à peu près radiale (19) et une arête (20) s'étendant perpendiculairement à l'autre.

13. Epandeur centrifuge selon l'une quelconque des revendications 1 à 12, caractérisé en ce que la chambre est pourvue, au moins le long de son bord situé en face du bord d'attaque de l'ailette de projection (8) dans le faisceau d'engrais, de bandes de matériau flexible (17), dans le sens de rotation de l'ailette de projection, bandes qui entrent dans le champ balayé par le mouvement de l'ailette de projection (8).

14. Epandeur centrifuge selon l'une quelconque des revendications 1 à 13, caractérisé en ce que les bandes de matériau flexible (17) sont disposées sur chacun des bords de la chambre (14) et du puits de sortie (4), pour lesquels elles ne s'infléchissent pas dans le faisceau d'engrais par la rotation de l'ailette de projection (8) à travers le faisceau d'engrais.

15. Epandeur centrifuge selon l'une quelconque des revendications 1 à 14, caractérisé en ce que les bandes de matériau flexible (17) sont formées de brins ou selon le cas d'une bande de brins en matière plastique.

16. Epandeur centrifuge selon l'une quelconque des revendications 1 à 15, caractérisé en ce qu'au moins le bord d'attaque de l'arête supérieure (12) de l'ailette de projection (8) est situé dans une section passant devant le puits de sortie (4) dans un plan parallèle au bord inférieur du puits de sortie et à la chambre, plan situé à distance et plus bas que celle-ci.

17. Epandeur centrifuge selon l'une quelconque des revendications 1 à 16, caractérisé en ce que l'arête supérieure (12) de chaque ailette de projection (8) est inclinée vers le bas de son bord d'attaque à l'encontre du sens de rotation sous la forme d'un angle de dépouille.

18. Epandeur centrifuge selon l'une quelconque des revendications 1 à 17, caractérisé en ce que le puits de sortie (4) et la chambre (14) présentent une section augmentant vers le bas à partir de la sortie d'écoulement (3).
